# EUROPÄISCHE PATENTANMELDUNG

(11) **EP 1 267 549 A2**
(43) Veröffentlichungstag der Anmeldung: **18.12.2002**
(21) Anmeldenummer: 02013413.6
(22) Anmeldetag: 12.06.2002
(51) Int. Cl.: H04L 29/06

(54) **Telekommunikationssystem und Verfahren zur Datennetztelefonie**

(30) Priorität: 12.06.2001 DE 10128503
(71) Anmelder: Tenovis GmbH & Co. KG, 60326 Frankfurt am Main (DE)
(72) Erfinder: Collet, Helmut, Dipl.-Ing., 67592 Flörsheim-Dalsheim (DE)
(74) Vertreter: Heinze, Ekkehard, Dipl.-Phys. Dr.

(57) **Zusammenfassung**

Telekommunikationssystem zur Datennetztelefonie, mit einer Telekommunikationsanlage und einer ersten Mehrzahl angeschlossener Telekommunikationsendgeräte sowie einer zweiten Mehrzahl von Computern, insbesondere PCs oder Workstations, wobei die Computer über ein Datennetz, insbesondere lokales Netz, in dem sie Datennetzadressen haben, miteinander verbunden sind und das Datennetz über einen Router und eine digitale Telekommunikations-schnittstelle mit der Telekommunikationsanlage verbunden ist.

## Beschreibung

Die Erfindung betrifft ein Telekommunikationssystem zur Datennetztelefonie nach dem Oberbegriff des Anspruchs 1 bzw. ein entsprechendes Verfahren nach dem Oberbegriff des Anspruchs 5.

Seit ihren Anfängen im Jahre 1995 hat sich die Internet-Telefonie zu einem massenhaft angewandten Telekommunikationsverfahren entwickelt - ohne allerdings die Ende der 90er Jahre prognostizierten Zuwachsraten und Marktanteile erreichen zu können. Ihr Hauptvorteil der niedrigen Kosten ist infolge der im Zusammenhang mit der Liberalisierung des Telekommunikationsmarktes stark gesunkenen Verbindungsentgelte für regionale und nationale Verbindungen weniger zum Tragen gekommen, als ursprünglich erwartet worden war. Zudem konnten trotz vielgestaltiger technischer Entwicklungen systembedingte Nachteile der der Übertragung zugrundeliegenden Paketvermittlung (Delay und Jitter und dadurch bedingte niedrige Sprachqualität) sowie der technischen Struktur des Internet und der Internet-Serviceprovider (geringere Verfügbarkeit gegenüber TK-Netzen und Anlagen) bis heute nicht ausgeräumt werden. Schließlich hat auch der Umstand, daß ein Internet-Telefonat bei den Beteiligten gewisse organisatorische Vorbereitungen und gewisse Computer- und Softwarekenntnisse erfordert, eine der Mobilfunktechnik vergleichbare Entwicklung dieses Telekommunikationsverfahrens verhindert.

Ungeachtet dessen gibt es heute eine Vielzahl durchaus attraktiver Einsatzfelder und Anwendungssituationen für die Internet-Telefonie, beispielsweise die unmittelbare telefonische Kontaktaufnahme nach einem Internet-Chat, das direkte Anwählen eines Call-Center eines Dienstanbieters über einen Link auf einer Website und nicht zuletzt die professionelle Anwendung über entsprechend ausgerüstete Telekommunikationsanlagen von Firmen oder Einrichtungen zur systematischen Kosteneinsparung, insbesondere bei interkontinentalen Verbindungen.

Im letztgenannten Bereich hat auch das Internet-Fax - welches im nachfolgend gebrauchten Begriff "Datennetztelefonie" mit einbegriffen sein soll, obgleich es sich hier nicht um eine Telefonie im engeren Sinne handelt - eine Marktnische gefunden.

Die im Rahmen der Internet-Telefonie etablierten Verfahren und Einrichtungen lassen sich in analoger Weise auch in Intranets einsetzen, so daß nachfolgend in einem verallgemeinernden Sinne der bereits erwähnte Begriff der Datennetztelefonie gebraucht wird. Hiermit soll auch zum Ausdruck gebracht werden, daß das vorgeschlagene Verfahren und System nicht notwendigerweise auf Datennetze beschränkt ist, in denen das TCP/IP-Protokoll im engeren Sinne angewandt wird.

Bei der Internet-Telefonie im engeren Sinne wird Sprache zwischen zwei mit Mikrofon und Lautsprecher (bzw. Hörgarnitur) ausgerüsteten PCs über das leitungsvermittelte öffentliche Telefonnetz (PSTN) zunächst zu einem Internet-Serviceprovider (ISP), von dort über das paketvermittelnde Internet zu einem Einwahlknoten eines weiteren Serviceproviders und von dort wieder über ein PSTN übertragen.

Sofern die beteiligten PCs über feste IP-Adressen verfügen, wird die Verbindung durch Router mit fester IP-Adresse hergestellt, die jeweils die Verbindung zwischen dem lokalen PSTN und dem Internet herstellen. Sind hingegen keine festen IP-Adressen vorhanden, wird die Verbindung über einen an das Internet angeschlossenen Server mit permanenter IP-Adresse etabliert.

Neben dieser einfachen Konfiguration gibt es die sogenannten "Voice-over-IP-Networks", die die Internet-Telefonie von normalen Telefonen aus ermöglichen. Hierbei sind Nebenstellenanlagen oder Vermittlungsstellen durch spezielle Netzverknüpfungspunkte (Gateways) miteinander über das Internet - oder ein Intranet - verbunden.

Der Teilnehmer wählt sich hierbei über sein Telefon und das PSTN mit der Rufnummer eines Gateway zunächst in dieses ein, authentisiert sich dort (beispielsweise durch Eingabe einer PIN) und gibt dann seine eigentliche Zielrufnummer ein. Der Gateway-Verbund ermittelt anhand der Zielrufnummer über eine Routingtabelle das diesem Ziel nächstgelegene Gateway, das anhand seiner IP-Adresse identifizierbar ist, und fordert von diesem die Herstellung einer Verbindung zum Ziel-Endgerät über das dortige PSTN an.

Bei der oben erwähnten professionellen Nutzung der Datennetztelefonie durch an Telekommunikationsanlagen angeschlossene Nutzer herkömmlicher Telefone wird in der sogenannten "First party application" die Telefonie-Software über eine standardisierte Schnittstelle (AEI-Schnittstelle) des Telefons angeschlossen. Der Signalisierung zur Applikation liegt die ETSI-Vorschrift zugrunde, der zufolge die Meldungen "Y-SETUP", "Y-CHANNEL-CONNECTED" etc. übertragen werden. Mit "Y-ESCAPE" werden diese Standardmeldungen um proprietäre Meldungen ergänzt.

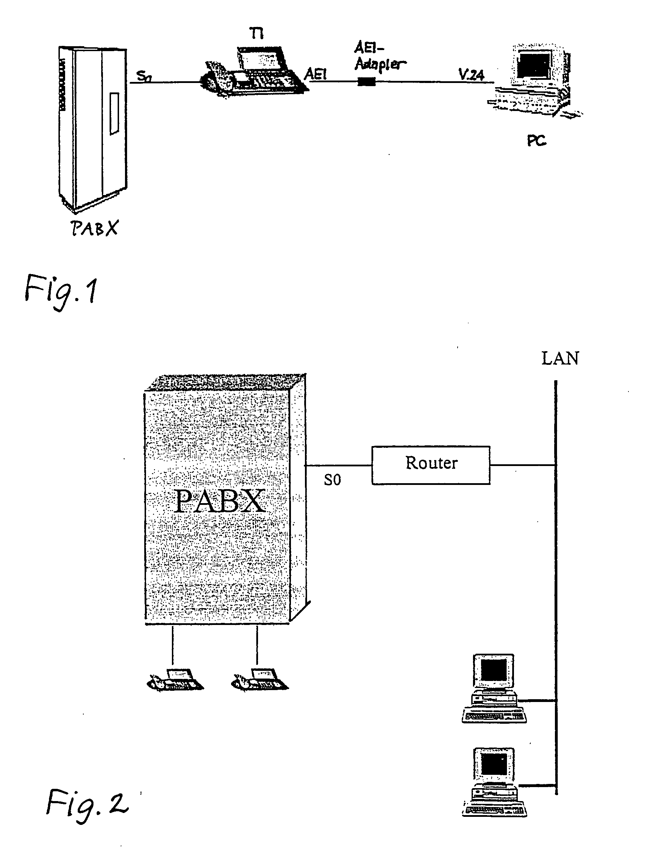

Wie in Fig. 1 dargestellt, werden die Meldungen über eine V.24-Schnittstelle vom Telekommunikations-Endgerät (Telefon) zum eingesetzten Datenendgerät (PC) übertragen. Dies erfordert eine direkte physikalische Verbindung zwischen Telekommunikationsund Datenendgerät über einen AEI-Adapter, und der Anschluß der Telefonie-Software ist auf Endgeräte beschränkt, die über die erwähnte standardisierte Schnittstelle verfügen.

Die genannten Umstände bedeuten erhebliche Limitierungen für den Ausbau von privaten Telekommunikationsanlagen für die Datennetztelefonie und führen zu einem erheblichen Hardwareaufwand, der die Betriebskostenvorteile teilweise zunichte macht. Im Endeffekt bedeutet dies, daß die Möglichkeiten der professionellen Datennetztelefonie in nicht-öffentlichen Telekommunikationsanlagen nicht ausgeschöpft werden.

Der Erfindung liegt daher die Aufgabe zugrunde, ein verbessertes Telekommunikationssystem sowie Verfahren zur Datennetztelefonie bereitzustellen, welche mit größerer Flexibilität und niedrigeren Kosten implementiert werden können.

Diese Aufgabe wird in ihrem Vorrichtungsaspekt durch ein Telekommunikationssystem mit den Merkmalen des Anspruchs 1 und in ihrem Verfahrensaspekt durch ein Verfahren mit den Merkmalen des Anspruchs 5 gelöst.

Die Erfindung schließt den wesentlichen Gedanken ein, die bisher praktizierte feste Zuordnung zwischen TK-Endgeräten und PCs (oder anderen Rechnern, die eine Netzverbindung herstellen) in einer TK-Anlage - speziell über AEI-Schnittstelle, AEI-Adapter und V.24-Schnittstelle - aufzugeben. Sie schließt weiterhin den Gedanken ein, die TK-Anlage mit den daran angeschlossenen Endgeräten über eine geeignete digitale TK-Schnittstelle mit einem Router zu verbinden, welcher seinerseits mit mehreren Computern in einem Netzverbund steht und einen dieser Computer für eine Übertragung (also flexibel) mit einem rufenden TK-Endgerät verbindet.

Ein wesentlicher Vorteil der vorgeschlagenen Lösung besteht darin, daß sie die Anbindung verschiedenartiger Endgeräte - Systemendgeräte mit oder ohne Standardschnittstelle (AEI-Schnittstelle), funktionale Endgeräte, analoge Endgeräte, analoge oder digitale Schnurlostelefone - an die PC-Telefonie im Rahmen einer TK-Anlage erlaubt und damit eine preisgünstige Lösung ermöglicht.

In einer aus derzeitiger Sicht bevorzugten Ausführung, die in Fig. 2 als Prinzipskizze dargestellt ist, dient als Schnittstelle die als ISDN-Endgeräteschnittestelle allgemein bekannte S₀-Schnittstelle (auch bezeichnet als S₀-Bus). Bei dem Computer-Netzverbund handelt es sich bevorzugt um ein lokales Netz LAN.

Bei dem vorgeschlagenen Verfahren werden die generierten Standardmeldungen (AEI-Meldungen) - statt sie zu einem fest zugeordneten Endgerät mit AEI-Schnittstelle zu senden - um eine Sub-Adresse erweitert und in einer proprietären Meldung gemäß dem Standard eines digitalen TK-Netzes erzeugt, speziell als ISDN-Meldung. Die so gebildeten Meldungen werden über die S₀-Schnittstelle zu dem Router gesendet, der anhand des Protokolldiskriminators den proprietären Charakter der Meldung erkennt, die Sub-Adresse extrahiert und analysiert, der Teilnehmerrufnummer eine konfigurierte IP-Adresse eines PC zuordnet und die Originalmeldung über das vorhandene physikalische Übertragungsmedium diesem PC zuleitet.

Im Beispiel handelt es sich bei dem physikalischen Übertragungsmedium um ein LAN vom Typ des Ethernet, grundsätzlich können aber auch ein Token-Ring oder ein ATM-LAN zur Anwendung kommen. Im letzteren Falle - der derzeit eher als Zukunftslösung zu nennen ist - gibt es kein gemeinsam genutztes Übertragungsmedium im engeren Sinne, sondern die in das System eingebundenen Computer sind sternförmig an Netzknoten herangeführt, innerhalb derer die Verbindungen über ein Koppelfeld vermittelt werden.

Die Ausführung der Erfindung ist nicht auf das genannte Beispiel und die oben hervorgehobenen Aspekte der vorgeschlagenen Lösung beschränkt, sondern ebenso in einer Vielzahl von Abwandlungen möglich, die im Rahmen fachgemäßen Handelns liegen.

## Patentansprüche

1. Telekommunikationssystem zur Datennetztelefonie, mit einer Telekommunikationsanlage und einer ersten Mehrzahl angeschlossener Telekommunikationsendgeräte sowie einer zweiten Mehrzahl von Computern, insbesondere PCs oder Workstations,
**dadurch gekennzeichnet, daß**
die Computer über ein Datennetz, insbesondere lokales Netz, in dem sie Datennetzadressen haben, miteinander verbunden sind und das Datennetz über einen Router und eine digitale Telekommunikations-Schnittstelle mit der Telekommunikationsanlage verbunden ist.

2. Telekommunikationssystem nach Anspruch 1,
**dadurch gekennzeichnet, daß**
der Router als passiver Router zur Weiterleitung von Standardmeldungen anhand einer zusätzlichen Sub-Adresse ausgebildet ist, welcher er eine Datennetzadresse zuordnet.

3. Telekommunikationssystem nach Anspruch 1 oder 2,
**dadurch gekennzeichnet, daß**
das Datennetz als IP-Netz ausgebildet ist, in dem die Datennetzadressen IP-Netzadressen sind.

4. Telekommunikationssystem nach Anspruch 2 oder 3,
**dadurch gekennzeichnet, daß**
die Telekommunikations-Schnittstelle eine S₀-Schnittstelle ist und die Standardmeldungen in der Telekommunikationsanlage als proprietäre ISDN-Meldungen erzeugt werden.

5. Verfahren zur Datennetztelefonie von einem an eine Telekommunikationsanlage angeschlossenen Telekommunikationsendgerät über einen Computer, insbesondere einen PC oder eine Workstation,
**dadurch gekennzeichnet, daß**
Standardmeldungen mit einer zusätzlichen Sub-Adresse versehen und über eine digitale Telekommunikations-Schnittstelle einem Router zugeleitet,
den Sub-Adressen im Router Datennetzadressen zugeordnet und
die Meldungen an die durch die Datennetzadressen spezifizierten Computer übergeben werden.

6. Verfahren nach Anspruch 5,
**dadurch gekennzeichnet, daß**
die Standardmeldungen in der Telekommunikationsanlage als proprietäre ISDN-Meldungen erzeugt und einer S₀-Schnittstelle zugeführt werden.

7. Verfahren nach Anspruch 5 oder 6,
**dadurch gekennzeichnet, daß**
den Sub-Adressen im Router IP-Netzadressen zugeordnet werden.
